**Europäisches Patentamt**

**European Patent Office**

**Office européen des brevets**

(19)

(11) Publication number: **0 103 554**
**A1**

(12) # EUROPEAN PATENT APPLICATION

(21) Application number: **83850206.0**

(22) Date of filing: **01.08.83**

(51) Int. Cl.³: **B 23 K 26/12**, G 02 B 1/12

(30) Priority: **18.08.82 SE 8204757**

(43) Date of publication of application: **21.03.84**
**Bulletin 84/12**

(84) Designated Contracting States: **AT BE CH DE FR GB IT LI NL SE**

(71) Applicant: **OPTIK INNOVATION AB OIAB, Korsta Box 57, S-830 30 Lit (SE)**

(72) Inventor: **Asterö, Ulf Jan-Erik, Korsta Box 57, S-830 30 Lit (SE)**

(74) Representative: **Burman, Tore et al, Bergling & Sundbergh AB P.O. Box 7645, S-103 94 Stockholm (SE)**

(54) **A method and apparatus for varying the refractive index for a surface of an optical lens.**

(57) An optical lens (4) is situated in a closed vessel (1-3) containing an atmosphere including a doping substance. The vessel (1) has a window (5) for a laser beam (13) from a laser unit (10) situated outside the vessel. By mutual displacement of the laser unit (10) and lens (4) the laser beam (13) is caused, to a controlled, varied extent, to affect the lens surface with heat such that the doping substance diffuses into it in response to the heat supply of the laser beam (13) to the object. The gaseous doping substance is selected to affect the refractive index of the surface of the lens (4) irradiated by the laser beam (13).

A METHOD AND APPARATUS FOR VARYING THE REFRACTIVE
INDEX FOR A SURFACE OF AN OPTICAL LENS.

Technical Field

The invention relates to a method for varying the refractive index for a surface of an optical lens, wherein the lens is inserted in a closed vessel, a controlled atmosphere of a doping substance for the lens material is established in the vessel, and the lens is heat treated in the vessel in order to permit the doping substance to be incorporated in the surface layer of the lens. The invention also relates to an apparatus for said purpose, comprising a vessel containing, further to the lens, a controlled atmosphere, there also being means adapted for heat-treating the lens in the vessel.

Background Art

In heat-treating the surface of an object it is important, at least at higher heat-treating temperatures, to control the atmosphere surrounding the object, for avoiding an undesired effect of an uncontrolled atmosphere on the surface of the object during the heat treatment, which may be carried out at relatively high temperature.

In the art, it is also known per se to dope a material surface by coating the surface of the object with the desired doping substance and to heat the thus-coated object so that the doping medium diffuses into the surface of the object.

In the first case there have not been provided any real possibilities of varying heating over the surface of the object for providing a controlled structure conversion in selected portions of the surface of the object, and in the second case it has not been possible to vary the degree of doping by a correspondingly controlled heat supply distribution over the surface of the object.

Furthermore, it has been customary in said prior art to supply heat to the surface of the object with the aid of a radiation source in the vessel and/or by supplying heat to the atmosphere in the vessel. This results in substantial problems, since the heat sources can then be damaged by the atmosphere, or the atmosphere can be affected, if it is heated to such an extent that it can effectively transfer heat to the object.

The performance of an optical lens can be improved if one or both surfaces thereof are aspherically corrected. Such correction means, however, an operation which is difficult to perform, often gives insufficient result, and comprises a physical variation by grinding and polishing, for example, of the lens surface profile

One object of the invention is therefore to provide a method and an apparatus allowing production of an optical lens having the properties of an aspherically corrected lens without any requirement of a lens surface which deviates from spherical shape.

Summary of the Invention

The invention relates to a method embracing the introduction of an optical lens into a closed vessel, a controlled atmosphere of a doping substance for the lens material being established in the vessel and the lens heat-treated in the controlled atmosphere, the method being essentially distinguished by the heat treatment being carried out with the aid of an energy radiation beam which is directed towards the lens through a window, transparent to the radiation, in the wall of the vessel. Energy emission from the radiation beam to the surface of the lens is controllably varied to provide a selected heat treatment distribution over the surface of the object. The atmosphere includes a gaseous doping substance for doping the surface layer of the object. In accordance with a preferred application of the invention, the lens consists of a lens with a spherical surface, the refractive index of which is altered under the action of the radiation in the presence of the doping substance. The radiation is preferably laser radiation from a laser unit placed outside the vessel, in a position such that the beam can pass through the window towards a desired portion of the surface of the lens. To vary and control the energy emission of the beam to the surface of the object, the beam can be displaced relative the surface of the object with varying speed and/or with varying radiation intensity.

In the case of doping lens surfaces which are rotationally symmetrical, the radiation can be carried out in annular, coaxial, sequential zones, such that the refractive index varies radially from the lens axis. The radiation can alternatively be carried out in a spiral path to provide a substantially corresponding result.

An apparatus for carrying out the method includes a vessel which is openable to allow the lens to be introduced into and removed from it. The vessel is furthermore adapted to contain a controlled atmosphere of a doping substance for the lens material. The apparatus further includes means for heat treating the object in the vessel.

The apparatus is substantially distinguished in that the heat treatment means is a source of energy radiation placed outside the vessel, that the vessel has a window substantially transparent to the radiation from the energy source, and that means are arranged for controlled variation of the energy emission from the radiation beam to the surface of the object, for providing selective heat distribution over the surface of the object. By heat distribution is intended heating power uptake or heat energy uptake. Heat distribution over the object can thus also be regulated in respect of the penetration depth in the object.

The atmosphere in the vessel can include a gaseous doping substance for doping the surface material of the lens, the depth and size of doping being variable by regulation of the radiation beam in relation to treated surface on the object or power and/or energy take-up in the surface of the object. The lens may have spherical surfaces, which are doped with the doping substance under the action of the energy radiation for selected variation of the refractive index of the lens surface. In particular, the refractive index change over a spherical lens surface can be arranged to give approximately the same effect as an aspheric correction of the lens surface.

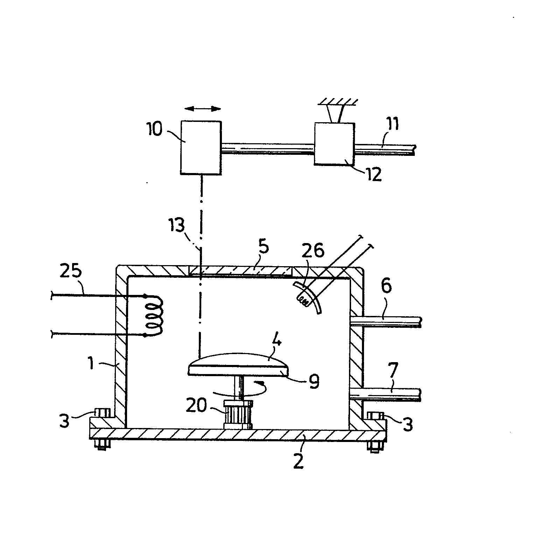

An embodiment of an apparatus in accordance with the invention will now be described in detail in the following in the form of an example and with reference to the accompanying drawing.

Drawing

The drawing schematically illustrates a vertical section through an apparatus in accordance with the invention.

Embodiment

A closed vessel 1 is illustrated on the drawing, and has a hatch 2, which may be opened by loosening the screw connection 3 for allowing an object 4 to be introduced into the cavity in the vessel 1. The wall of the vessel 1 also has a window 5. Connection pipes 6 and 7 for inlet and outlet of a controlled atmosphere are provided for the vessel. Outside the vessel there is a laser unit 10 emitting a laser beam 11 through the window 5 of the vessel towards the object 4. The unit 10 is mounted on a rod 11 linearly displaceable in a guide 12 which is disposed fixedly. Displacement of the rod 11 is thus achieved in the direction of the double arrow by unillustrated displacement means.

The object 4 is carried on a turntable 9, rotatably with the aid of a motor 20. The object 4 may have a rotationally symmetric surface facing towards the window 5, the axis of symmetry of this surface coinciding with the axis of rotation of the turntable 9.

A cooling coil 25 may also be arranged in the vessel 1. The vessel may furthermore contain a heat emission means 26 adapted for keeping the object 4 at a raised temperature, in relation to the surroundings of the vessel, with the aid of radiation or via the atmosphere in the vessel.

A doping substance for the surface of the object 4, well known to those skilled in the art, can be included in the controlled atmosphere introduced into the vessel 1. Diffusion of this doping substance into the surface of the object facing towards the window may be regulated by radiation energy in selected areas and to a selected extent being supplied to said surface of the object 4 from a laser unit 10. By suitable displacement of the unit 10 in a direction parallel to a radius from the symmetrical axis of the object 4, simultaneous with rotation of the turntable 9, the surface of the object 4 may be doped or alloyed to a predetermined extent for providing the desired doping variation in the radial direction of the object's surface. The cooling means 25 and the heating means 26 are utilized for keeping the object 4 at a substantially uniform temperature level, apart from the places which are locally heat-treated with the aid of the laser beam 4.

CLAIMS

1. A method for varying the refractive index for a surface of an optical lens, wherein the lens is inserted in a closed vessel, a controlled atmosphere of a doping substance for the lens material is established in the vessel, and the lens is heat treated in the vessel in order to permit the doping substance to be incorporated in the surface layer of the lens characterized in that the heat treatment is carried out with the aid of an energy radiation beam (11) from a radiation source (10) situated outside the vessel (1) and directed towards the lens through a window (5), transparent to the radiation, in the wall of the vessel, and in that the energy emission of the radiation beam (11) to the surface of the object (4) is controllably varied to provide selected heat distribution, and thereby a corresponding doping and index variation over the lens surface.

2. Method as claimed in claim 1, characterized in that the radiation is a laser radiation.

3. Apparatus for varying the refractive index for a surface of an optical lens, including a vessel (1) adapted for containing a controlled atmosphere of a doping substance for the lens material, in addition to the lens (4), and means (10) for heat-treating the lens in the vessel (1), characterized in that the heat treatment means (10) is a radiation energy source situated outside the vessel (1), in that the vessel (1) has a window (5) substantially transparent to the energy radiation from said source, and in that means (11,12,9,20) are arranged for varying the energy emission of the radiation beam (11) to the surface of the object (4) for providing selected heat distribution, and thereby a corresponding doping and index variation over the surface of the object.

4. Apparatus as claimed in claim 3, characterized in that the radiation energy source (10) is a laser unit.

0103554

0103554

European Patent
Office

**EUROPEAN SEARCH REPORT**

Application number

EP 83 85 0206

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | WO-A-8 201 494 (OPTIK-INNOVATION AB OIAB) * Page 2, line 30 - page 3, line 36 * | 1-4 | B 23 K 26/12 G 02 B 1/12 |
| P,A | EP-A-0 064 352 (INOUE-JAPAX RESEARCH INCORP.) * Page 2, line 12 - page 3, line 16 * | 1-4 | |
| A | US-A-4 212 900 (R.A. SERLIN) * Column 1, line 56 - column 2, line 54 * | 1-4 | |
| A | US-A-3 634 219 (P. SINAI) * Column 2, lines 22-56 * | | TECHNICAL FIELDS SEARCHED (Int. Cl. 3) B 23 K 26/00 C 03 B 32/00 C 03 C 17/00 C 03 C 23/00 G 02 B 1/00 |

The present search report has been drawn up for all claims

| Place of search BERLIN | Date of completion of the search 25-10-1983 | Examiner BOTTERILL K.J. |
|---|---|---|